# EUROPEAN PATENT APPLICATION

(11) **EP 4 169 377 A1**
(43) Date of publication of application: **26.04.2023**
(21) Application number: 21204459.8
(22) Date of filing: 25.10.2021
(51) Int. Cl.: A01K 7/02, A01K 7/06, A01K 15/02

(54) **A DRINKING BOWL AND A FEED TROUGH WITH THE DRINKING BOWL FOR PIGLETS**

(71) Applicant: LB Farm Advisor ApS, 5600 Faaborg (DK)
(72) Inventor: Brunse, Lars, 5600 Faaborg (DK)
(74) Representative: Patrade A/S

(57) **Abstract**

A drinking bowl (10) for piglets, the drinking bowl (10) comprising
- a cup (20) for holding a liquid,
- a main channel (30) for connecting with a global liquid supply, the main channel (30) comprising a global inlet (31), a global outlet (32) and between the global inlet (31) and global outlet (32) or at the global outlet (32) a main pressure-activated valve (40) configured to allow liquid flow into the cup (20) from the main channel (30) upon pressure activation,
- a drip bypass (60) comprising a bypass inlet (61) adapted for connecting with a local liquid container (80), and a bypass outlet (62) connected to the cup (20).

## Description

### Field of the Invention

The present invention relates to a drinking bowl for piglets and a feed trough with the drinking bowl for piglets designed for reducing mortality rate of the piglets by using a drip bypass to train piglets to use a drinking bowl.

### Background of the Invention

In Danish piggeries, the piglet mortality rate is about 21 %. Furthermore, over the last couple of years there has been an increased political pressure in Denmark for decreasing this piglet mortality rate.

In 2018, the industry agreed to lower the piglet mortality rate to 16 %, however in 2021 the piglet mortality rate remains above 20 %.

Thus, there is a long felt need for solutions which can lower the piglet mortality rate to 16 % or at least contribute to lowering of piglet mortality rate.

### Object of the Invention

The object of the invention is to provide a drinking bowl and a feed trough designed to lower the piglet mortality rate.

### Description of the Invention

An object of the invention is achieved by a drinking bowl for piglets. The drinking bowl comprises
- a cup for holding a liquid,
- a main channel for connecting with a global liquid supply, the main channel comprises a global inlet, a global outlet and between the global inlet and global outlet or at the global outlet a main pressure-activated valve configured to allow for liquid flow into the cup from the main channel upon pressure activation,
- a drip bypass comprising a bypass inlet adapted for connecting with a local liquid container, and a bypass outlet connected to the cup.

The drip bypass comprising a bypass inlet adapted for connecting with a local liquid container, and a bypass outlet connected to the cup, may ensure a continuous drip of liquid into the cup for holding liquid, ensuring that the piglets always have access to liquid. In another embodiment, the drip bypass may be configured to provide a timed drip, where the drip bypass releases a predetermined liquid volume once every 15 minutes or 30 minutes or 60 minutes or at another time interval.

By having a liquid dripping into the cup for holding liquid, the piglets might accidentally activate the main pressure-activated valve configured to allow for liquid flow into the cup from the main channel upon pressure activation thus teaching the piglet how to activate the main pressure-activated valve. Both the continuous drip of liquid or timed drip into the cup for holding liquid and the aspect of teaching the piglets how to activate the main pressure-activated valve, ensures that the piglets always have access to liquid thereby minimising the risk of the piglets being dehydrated and thus reducing the piglet mortality rate.

The cup for holding liquid may comprise a base/bottom encapsulated by sides to enable the containment of liquid inside the cup. The base/bottom may be sloped to direct the liquid close to the edge opposite the displaceable tongue.

In an embodiment, the main pressure activated valve may be a pin valve or a tube valve.

The local liquid container may be configured to contain water.

A piggery will comprise a plurality of the drinking bowls according to the invention, where the drinking bowls are connected along the global channels in series and/or in parallel where the piggery will have system for circulating drinking liquid such as water though the plurality of the drinking bowls.

The design to have a drip bypass connectable a local liquid container enables that the drip bypass is only utilised in the cases where it is needed such as for the first weeks of a piglet's life to train it how to use the drinking bowl. After a few weeks it may not be necessary to use the drip bypass thus the local liquid container is not replaced or refilled with a drinkable liquid such as water.

Furthermore, the additional function of the drip can be applied locally at the individual drinking bowls i.e. at the individual pigsties such as farrowing pens.

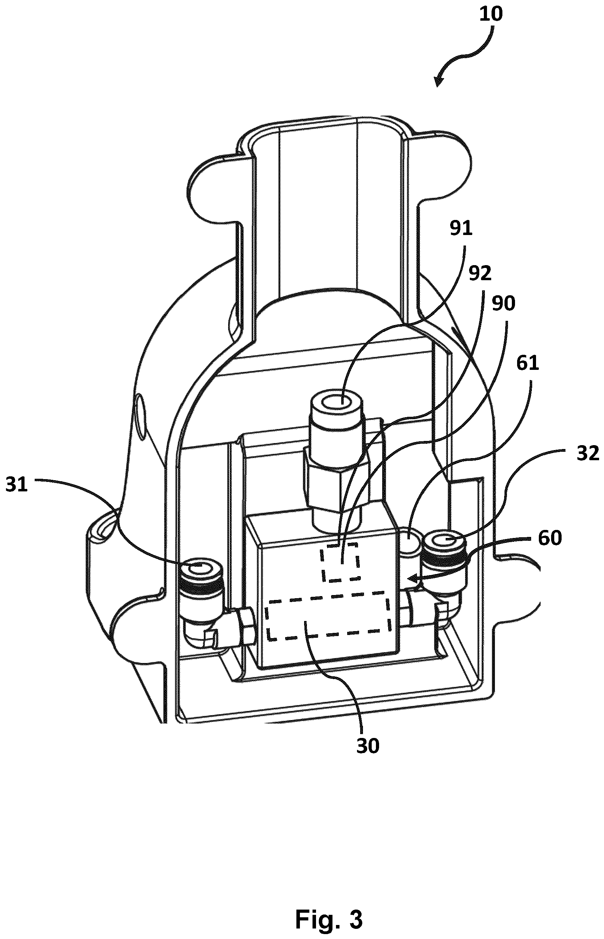

The main channel may be designed to be a flow-through where the liquid flows through a plurality of drinking bowls. This design is typically chosen when using a liquid which should not be stagnant such as milk. An example of this design is shown in figure 3.

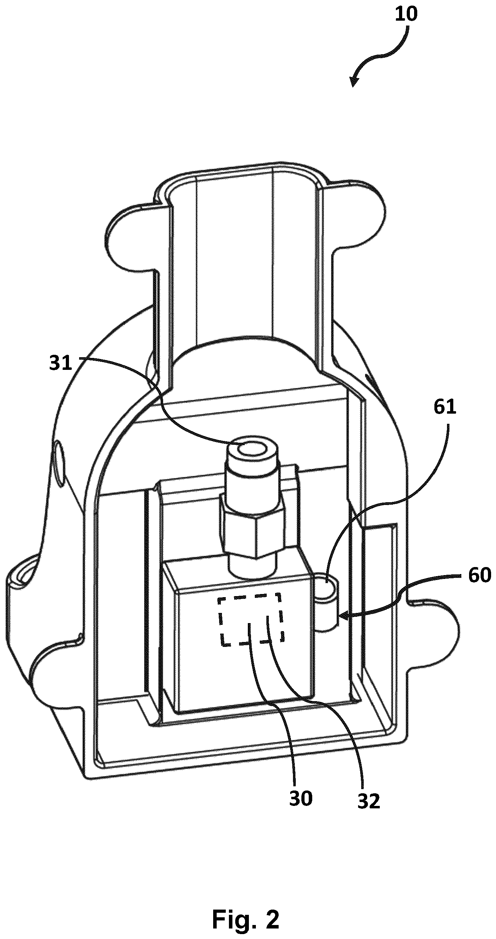

In other embodiments, the main channel may be designed such that the liquid flows through the global outlet to the cup, when the main pressure-activated valve is activated. An example of this design is shown in figure 2.

In an embodiment, the bypass inlet is in liquid communication with global liquid supply either directly with a direct connection or indirectly where the local liquid container is filed by the global liquid supply so that a user will not need to refill the local liquid.

In an aspect, a drinking bowl may comprise a local liquid container connected to the bypass inlet.

The local liquid container may be filed with water or raw cow milk or water filled with additives such as vitamins and/or minerals and/or glucose.

However, since the local liquid container is connected to the bypass inlet, water is the preferred liquid as there is a high chance that the liquid may go to waste. The cost of raw cow milk, vitamins, minerals, and glucose is significantly higher than water and thus if water is wasted then the loss is minimised.

In an aspect, a drinking bowl comprise a drip valve adapted to enable a controllable liquid flow, the drip valve being positioned either
- between the bypass inlet and the bypass outlet or
- between the local liquid container and the bypass inlet or
- at the bypass outlet.

The drip valve can be positioned at various positions as the drip valve is not to be controlled by the piglets or pigs.

In an aspect, the drinking bowl may comprise an additive channel for adding additives to the liquid in the cup, the additive channel comprises an additive inlet for connecting with a local additive liquid container, and an additive outlet being in a liquid communication with the main channel.

In this case, the main channel should not be a flow through main channel since the additives will be distributed to all drinking bowls simultaneously which is material inefficient. Instead if the main channel has the global outlet facing the cup then it is possible to add additives to the main channel without spreading the additives to other drinking bowls.

If however the main channel is designed to be a flow through, as the embodiment in figure 3, then the additive channel should be implemented as in the aspect below.

In an aspect, the drinking bowl may comprise an additive channel for adding additives to the liquid in the cup, the additive channel comprises an additive inlet for connecting with a local additive liquid container, and an additive facing the cup and comprising a second pressure-activated valve configured to allow liquid flow into the cup from the additive channel upon pressure activation.

The additive liquid in the local additive liquid container in the two aspects above may comprise raw milk and/or vitamins and/or minerals or glucose. The raw milk may be from a cow or another suitable farm animal.

The additive liquid can be a significant expense thus it is in the farmer's interest not to use excessive amounts of the additive liquid when it is not needed. The advantage of the additive channel being connected with the local additive liquid container is that the farmer can decide whether to add additives to the liquid dispensed in the drinking bowl in a specific pigsty targeting a specific group of piglets. By adding the additive liquid locally, the farmer lowers additive use as the liquid supplied by the global liquid supply may be an inexpensive liquid such as water and the additive liquid is supplied where the farmer deems it is necessary.

This is also why additive liquid only flows when the second pressure-activated valve is activated by a piglet or pig.

In some embodiments, the main pressure-activated valve and the second pressure-activated valve is the same valve, where pressure activation of the valve will cause liquid flow from both the global channel and the additive channel such as when the additive outlet is in a liquid communication with the main channel.

In an aspect, a drinking bowl comprise a local additive liquid container connected to the additive inlet.

The local additive liquid container may be filed with raw cow milk or water filled with additives such as vitamins and/or minerals and/or glucose.

Upon activation of the second pressure-activated valve additive liquid will flow into the cup from where the piglet can drink the liquid with additives, which will be chosen with a view towards lowering of the piglet mortality rate by providing additional nutrients locally at the specific drinking bowl when needed.

In an aspect, a drinking bowl comprise a displaceable tongue and the main pressure-activated valve is arranged to be opened by displacement of the displaceable tongue.

The displaceable tongue may be displaced by a piglet's snout causing the tongue to activate the main pressure-activated valve.

The arrangement may be that the main pressure-activated valve is positioned behind the displaceable tongue.

The displaceable tongue may extend into the cup such that the chance of a snout activating the displaceable tongue is increased.

In an aspect, a drinking bowl wherein the second pressure-activated valve is arranged to be opened by displacement of the displaceable tongue.

In the situation where a local additive liquid container is connected to the additive inlet and the displaceable tongue is displaced, liquid will flow from both the main pressure-activated valve and the second pressure-activated valve and the liquids will mix in the cup for the piglet or pig to drink.

In an aspect, a drinking bowl wherein the drip bypass is downwardly sloped between the bypass inlet and the bypass outlet to prevent accumulation of liquid in the drip bypass.

The slope prevents still liquid within the drip bypass as still liquid could be dangerous for a weakened piglet.

In an aspect, the cup may be a combined liquid and feed trough and the drinking bowl may comprise a feed channel for supplying feed to the feed trough.

Thereby, the cup/feed through will contain feed and liquid.

In an aspect, drip valve may be positioned at the bypass outlet. The drip valve may comprise a ball and a grating for holding the ball near the bypass outlet, wherein the diameter of the ball is larger than the bypass outlet.

When the cup is filled with liquid and/or feed then the liquid will lift the ball as the density is lower than water. The ball will thereby block the bypass outlet and stop liquid flow from the bypass channel.

Thus, the bypass outlet is positioned below the highest possible water level of the cup such that the bypass outlet is blocked before liquid is wasted.

The grating ensures that the ball is kept below the bypass outlet. An object of the invention is achieved by a feed trough for pigs and especially piglets. The feed trough comprises one or more drinking bowls according to one or more of the previous described embodiments.

The one or more drinking bowls may be positioned on each side of the feed trough.

### Description of the Drawing

Embodiments of the invention will be described in the figures, whereon:
- Fig. 1: illustrates a drinking bowl;
- Fig. 2: illustrates an embodiment of the backside of a drinking bowl in figure 1;
- Fig. 3: illustrates another embodiment of the backside of a drinking bowl in figure 1;
- Fig. 4: illustrates a feed trough comprising drinking bowls;
- Fig. 5: illustrates a drinking bowl with a cup being a combined liquid and feed trough;
- Fig. 6: illustrates a further embodiment of a drinking bowl in figure 1; and
- Fig. 7: illustrates an even further embodiment of a drinking bowl in figure 1.

**Detailed Description of the Invention**

| **Item** | **No** |
|---|---|
| Drinking bowl | 10 |
| Cup | 20 |
| Main channel | 30 |
| Global inlet | 31 |
| Global outlet | 32 |
| Global liquid supply to drip bypass valve | 33 |
| Main pressure-activated valve | 40 |
| Second pressure-activated valve | 50 |
| Drip bypass | 60 |
| Bypass inlet | 61 |
| Bypass outlet | 62 |
| Drip valve | 70 |
| Ball | 71 |
| Grating | 72 |
| Local liquid container | 80 |
| Local additive liquid container | 81 |
| Local drop to global supply valve | 82 |
| Local drop to drip bypass valve | 83 |
| Additive channel | 90 |
| Additive inlet | 91 |
| Additive outlet | 92 |
| Displaceable tongue | 100 |
| Feed trough | 110 |
| Feed channel | 120 |

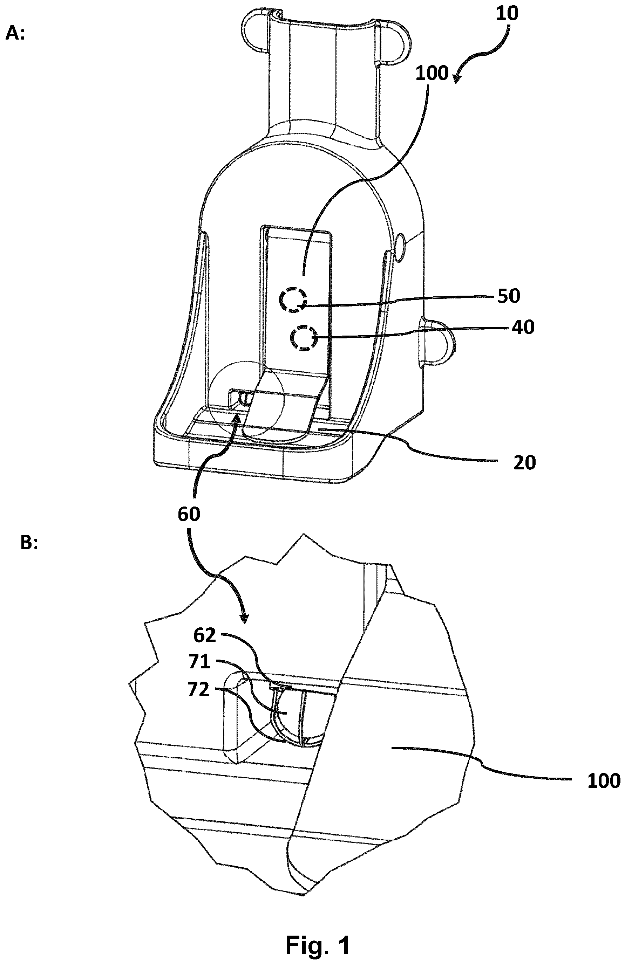

Fig. 1, 2, 3, 6, and 7 illustrate a drinking bowl 10. The backside of the drinking bowl 10 can differ as shown in figure 2 and 3.

The drinking bowl 10 comprises a cup 20 for holding a liquid. The liquid in the cup 20 may be water, additive liquid, or a mix. The additive liquid may comprise raw milk, vitamins, minerals, or a mix of liquid additives.

The drinking bowl 10 comprises a main channel 30 for connecting with a global liquid supply. The main channel 30 comprises a global inlet 31, a global outlet 32 and between the global inlet 31 and global outlet 32 (in figure 3) or at the global outlet 32 (in figure 2) a main pressure-activated valve 40 configured to allow liquid flow into the cup 20 from the main channel 30 upon pressure activation - the valve 40 is activated by displacement of the tongue 110. In an embodiment the main pressure activated valve 40 is a pin valve or a tube valve. The main pressure activated valve 40 may be activated by the pressure from a snout or leg of a piglet

The drinking bowl 10 comprises a drip bypass 60 comprising a bypass inlet 61 adapted for connecting with a local liquid container, and a bypass outlet 62 connected to the cup 10. The drip bypass provides the cup 20 for holding a liquid with continuous drip of liquid from the local liquid container 80 ensuring that the piglets always have access to liquid in the cup 20, even if the piglets have yet to learn how to activate the main pressure-activated valve 40.

Figure 3 discloses that the drinking bowl 10 comprises an additive channel 90 for adding additives to the liquid in the cup 20. The additive channel 90 comprises an additive inlet 91 for connecting with a local additive liquid container 81, and an additive outlet 92 facing the cup 20 and comprising a second pressure-activated valve 50 configured to allow liquid flow into the cup 20 from the additive channel 90 upon pressure activation.

Although not shown, the drinking bowl 10 shown in figure 3 may comprise an additive channel 90 for adding additives to the liquid in the cup 20. The additive channel 90 comprises an additive inlet 91 for connecting with a local additive liquid container 81, and an additive outlet 92 being in liquid communication with the main channel 30.

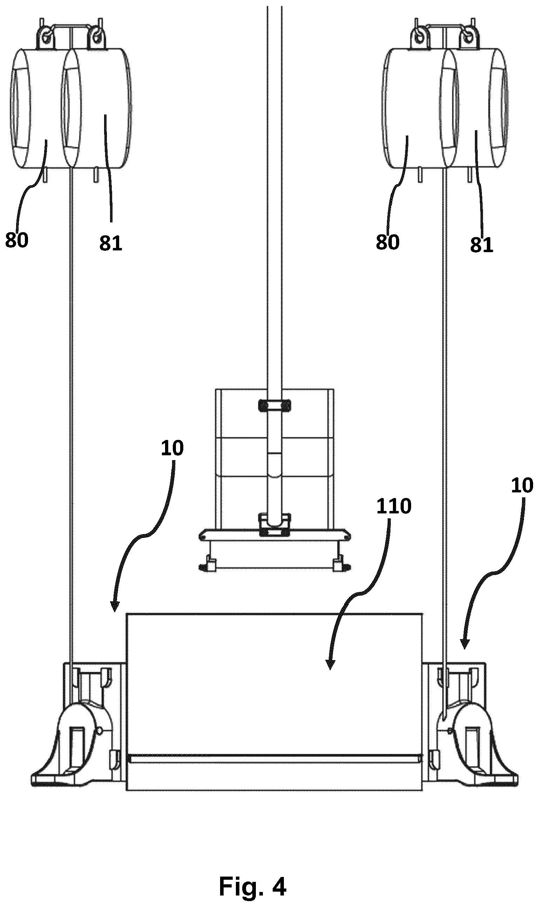

Fig. 4 illustrates a feed trough (110) comprising one or more drinking bowls (10), which may be the same embodiment as disclosed in Fig. 1 and 2 or 3.

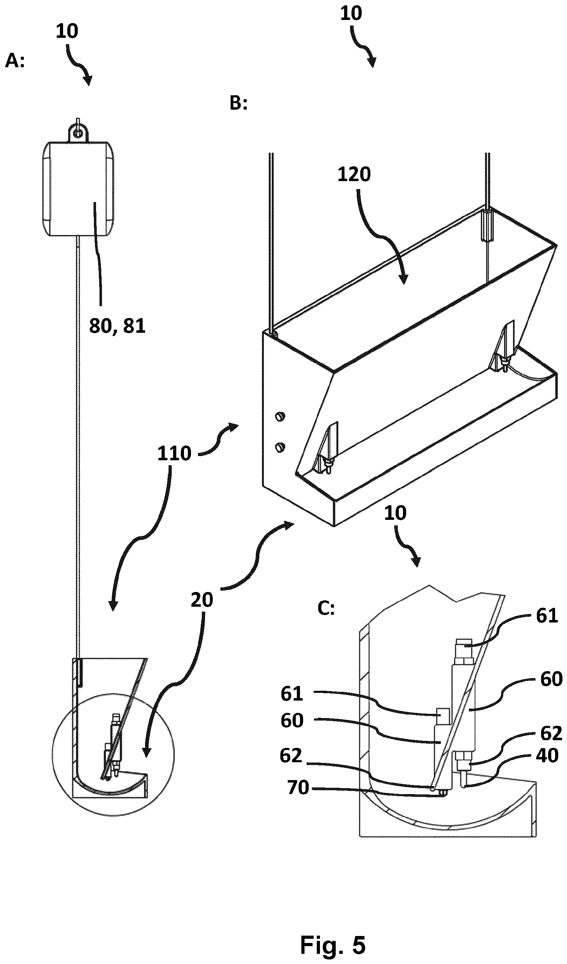

Fig. 5 illustrates drinking bowl 10 with a cup 20 being a combined liquid and feed trough 110.

The feed trough 110 comprising a drip bypass 60 and a main channel 60 for enabling flow into the feed trough 110. Figure 4A discloses a cross-section of the feed trough 110, and figure 4C a close-up of the cross-section of the feed trough 110, ad figure 4B discloses a perspective view of the feed trough 110.

The feed trough 110 comprises a drip bypass 60 comprising a bypass inlet 61 adapted for connecting with a local liquid container 80, and a bypass outlet 62 connected to the feed trough 110 to enable liquid flow into the feed trough 110. The bypass valve 70 may be similar to the bypass valve 70 shown in figure 1B.

The main channel 60 comprises an global inlet 61 for connecting with a global liquid supply, an main outlet 62, a main pressure-activated valve 40 configured to allow for liquid flow into the feed trough 110 from the main channel 60 upon pressure activation.

The main pressure-activated valve 40 is extending from the global outlet 62.

In the figure, the local liquid container 80 and the local additive liquid container 81 is shown as being the same unit, however the containers 80, 81 are separate, similar to what is shown in figures 1-4.

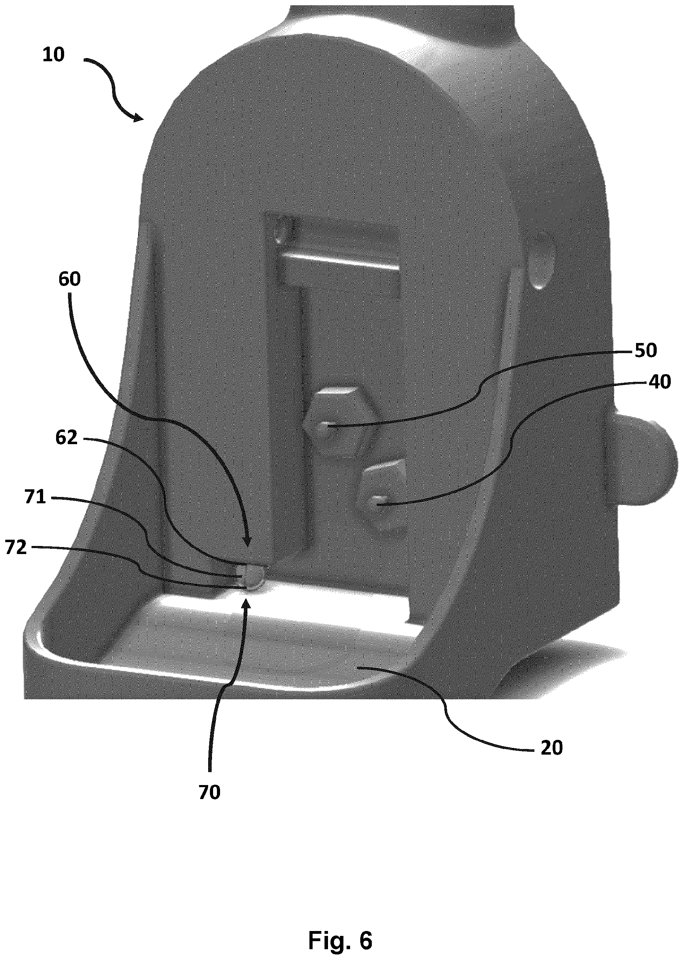

Fig. 6 illustrates a drinking bowl 10 with the main pressure-activated valve 40 and the second pressure-activated valve 50 may be a pin valve. The main and second pressure activated valves 40, 50 are activated by pressure-activating means (not shown), the pressure-activating means may be a displaceable tongue such as shown in figure 1.

The drinking bowl 10 comprises a drip bypass 60 being downwardly sloped between the bypass inlet 61 and the bypass outlet 62 to prevent accumulation of liquid in the drip bypass 60. The bypass outlet 62 is positioned below highest possible water level of the cup 20.

The drinking bowl 10 comprises a drip valve 70 which may comprise a ball 71 and a grating 72 for holding the ball 71 near the bypass outlet 62, wherein the diameter of the ball 71 is larger than the bypass outlet 62. When the cup 20 is filled with liquid, the liquid will lift the ball 71 as the density is lower than water. The ball 71 will thereby block the bypass outlet 62 and stop liquid flow from the bypass inlet 61, thereby preventing wasting liquid by over filling the cup 20.

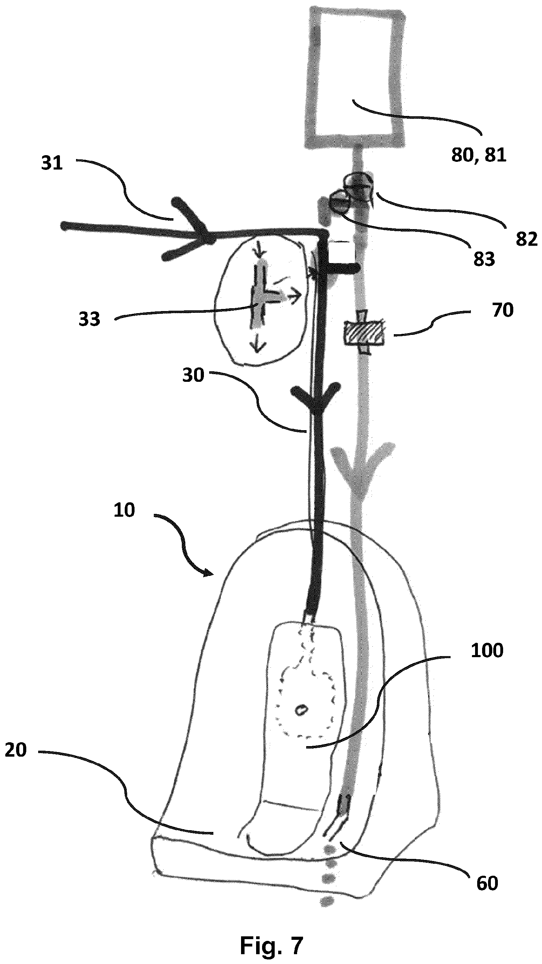

Fig. 7 illustrates a drinking bowl 10 connected to a to a global liquid supply and a local liquid container 80 and a local additive liquid container 81. This embodiment comprises a number of valves to configure and change how and from which liquid supply liquid comes into the drinking bowl 10. The valves can be opened individually or in combination.

In the standard configuration, the global liquid supply to drip bypass valve 33 is closed allowing the liquid from the global liquid supply to flow into the drinking bowl 10 upon activation of the main pressure-activated valve 40, in one embodiment, the main pressure-activated valve 40 is activated by displacement of the displaceable tongue 100.

Configuration 1: The local drop to global supply valve 82 is open and liquid is supplied from the local additive liquid container 81 to the main channel 30, mixing the liquid from the global liquid supply with additives from the local additive liquid container 81, thus allowing the liquid from the global liquid supply mixed with additives, to flow into the drinking bowl 10 upon activation of the main pressure-activated valve 40.

Configuration 2: The global liquid supply to drip bypass valve 33 is open and liquid is supplied from the global liquid supply through the main channel to the drip bypass 60 through the bypass inlet 61 bypassing the local liquid containers 80, 81, enabling a continuous drip with liquid from the global liquid supply into the cup 20.

Configuration 3: Local drop to drip bypass valve 83 is open connecting the content of the local liquid container 80 and/or a local additive liquid container 81 to the drip bypass 60, enabling a continuous drip with liquid from a local liquid container into the cup 20.

## Claims

1. A drinking bowl (10) for piglets, the drinking bowl (10) comprising
- a cup (20) for holding a liquid,
- a main channel (30) for connecting with a global liquid supply, the main channel (30) comprising a global inlet (31), a global outlet (32) and between the global inlet (31) and global outlet (32) or at the global outlet (32) a main pressure-activated valve (40) configured to allow liquid flow into the cup (20) from the main channel (30) upon pressure activation,
- a drip bypass (60) comprising a bypass inlet (61) adapted for connecting with a local liquid container (80), and a bypass outlet (62) connected to the cup (10).

2. A drinking bowl (10) according to claim 1, wherein the drinking bowl (10) comprises a local liquid container connected to the bypass inlet (61).

3. A drinking bowl (10) according to claim 1 or 2, wherein the drinking bowl (10) comprises a drip valve (70) adapted to enable a controllable liquid flow, the drip valve (70) being positioned either
- between the bypass inlet (61) and the bypass outlet (62); or
- between the local liquid container (80) and the bypass inlet (61); or
- at the bypass outlet (62).

4. A drinking bowl (10) according to any one of the previous claims, wherein the drinking bowl (10) comprises an additive channel (90) for adding additives to the liquid in the cup (20), the additive channel (90) comprises an additive inlet (91) for connecting with a local additive liquid container (81), and an additive outlet (92) being in either a liquid communication with the main channel (30), or
- the additive outlet (92) facing the cup (20) and comprising a second pressure-activated valve (50) configured to allow liquid flow into the cup (20) from the additive channel (90) upon pressure activation.

5. A drinking bowl (10) according to claim 5, wherein the drinking bowl (10) comprises a local additive liquid container (81) connected to the additive inlet (91).

6. A drinking bowl (10) according to any one of the previous claims, wherein the drinking bowl (10) comprises a displaceable tongue (100) and the main pressure-activated valve (40) being arranged to be opened by displacement of the displaceable tongue (100).

7. A drinking bowl (10) according to claim 6, wherein the second pressure-activated valve (50) being arranged to be opened by displacement of the displaceable tongue (100).

8. A drinking bowl (10) according to any one of the previous claims, wherein the drip bypass (60) being downwardly sloped between the bypass inlet (61) and the bypass outlet (62) to prevent accumulation of liquid in the drip bypass (60).

9. A drinking bowl (10) according to any one of the previous claims, wherein the cup (20) being a combined liquid and feed trough (110) and the drinking bowl (10) comprises a feed channel (120) for applying feed to the feed trough (110).

10. A drinking bowl (10) according to any one of the previous claims, wherein drip valve (70) is positioned at the bypass outlet (62) and the drip valve (70) comprises a ball (71) and a grating (72) for holding the ball (71) near the bypass outlet (62), wherein the diameter of the ball (71) is larger than the bypass outlet (62).

11. A drinking bowl (10) according to claim 10, wherein the bypass outlet is positioned below highest possible water level of the cup.

12. A feed trough (110) for pigs, the feed trough (110) comprises one or more drinking bowls (10) according to any one of the previous claims.
